# EUROPÄISCHE PATENTSCHRIFT

(11) **EP 0 289 741 B1**
(45) Veröffentlichungstag und Bekanntmachung des Hinweises auf die Patenterteilung: **23.02.1994**
(21) Anmeldenummer: 88103757.6
(22) Anmeldetag: 10.03.1988
(51) Int. Cl.: B01D 47/00

(54) **Verfahren und Vorrichtung zum Ausschleusen von feinkörnigen heissen Feststoffen**
Method and device of the discharge of fine grained and hot solids
Procédé et dispositif d'évacuation de matières solides à grain fin et chaud

(30) Priorität: 02.05.1987 DE 3714749
(43) Veröffentlichungstag der Anmeldung: 09.11.1988
(73) Patentinhaber: DEUTSCHE BABCOCK ENERGIE- UND UMWELTTECHNIK AKTIENGESELLSCHAFT, 46049 Oberhausen (DE)
(72) Erfinder: Dziobek, Frank, D-4330 Mülheim (DE)
(74) Vertreter: Müller, Jürgen, Dipl.-Ing.

(56) Entgegenhaltungen:
- EP-A- 0 102 828
- DE-A- 2 455 127
- DE-A- 2 829 629
- DE-A- 2 856 059
- DE-B- 1 240 211
- US-A- 4 533 363

## Beschreibung

Die Erfindung betrifft ein Verfahren und eine Vorrichtung zum Ausschleusen von feinkörnigen, heißen Feststoffen aus einer Heißgasentstaubungsanlage, in der sie unter dem erhöhten Druck des als Obergas wirkenden Heißgases stehen.

Bei bekannten Anlagen, zum Beispiel Druckwirbelschichtfeuerungen (VGB Kraftwerkstechnik 63 (1983), Nr. 5, S. 422 - 427) erfolgt das Ausschleusen der Flugasche aus den Abscheidern und der Bettasche mit Hilfe von Druckschleusen, denen eine Kühleinrichtung vorgeschaltet ist. Diese Druckschleusen arbeiten diskontinuierlich und erfordern eine Druckquelle sowie durch Armaturen abgesicherte Rohrleitungen, um das Schleusensystem unter wechselnden Druck zu setzen. Ein solches Schleusensystem ist mit einem hohen apparativen Aufwand verbunden.

In der US-A-4 533 363 ist ein Verfahren zur Herstellung von Synthesegas beschrieben, das in einem Reaktor erzeugt wird und das zusammen mit den in ihm enthaltenen Feststoffen einer Quenchkammer zugeführt wird. In der Quenchkammer wird das Synthesegas gekühlt und von den Feststoffen befreit. Die Feststoffe sammeln sich in der Absetzzone im unteren Teil der Quenchkammer an, werden aus dieser Absetzzone in einen Behälter abgelassen und aus diesem unter erhöhtem Druck stehenden Behälter auf eine nicht beschriebene Weise abgezogen.

Der Erfindung liegt die Aufgabe zugrunde, das Ausschleusen von feinkörnigen, heißen Feststoffen aus einer unter erhöhtem Druck stehenden Heißgasentstaubungsanlage zu vereinfachen.

Diese Aufgabe wird erfindungsgemäß durch ein Verfahren gemäß Anspruch 1 bzw. durch eine Vorrichtung gemäß Anspruch 3 gelöst. Vorteilhafte Ausgestaltungen der Erfindung sind in den Unteransprüchen angegeben.

Bei der erfindungsgemäßen Ausschleusung werden die Feststoffe aufgrund der im Gasaustritt des Wäschers eingestellten Druckdifferenz kontinuierlich abgezogen. Die Entspannung auf Umgebungsdruck erfolgt in der flüssigen Phase am Austrag des Wäschers, so daß ein aufwendiges Schleusensystem entfallen kann. Die abgetrennten Feststoffe sind feucht und damit direkt deponiefähig. Der Feststoff wird im Wäscher gleichzeitig gekühlt, wobei im Gegensatz zu einer indirekten Kühlung der Feststoffe auf eine Taupunktsunterschreitung in den die Feststoffe transportierenden Gasen keine Rücksicht genommen zu werden braucht.

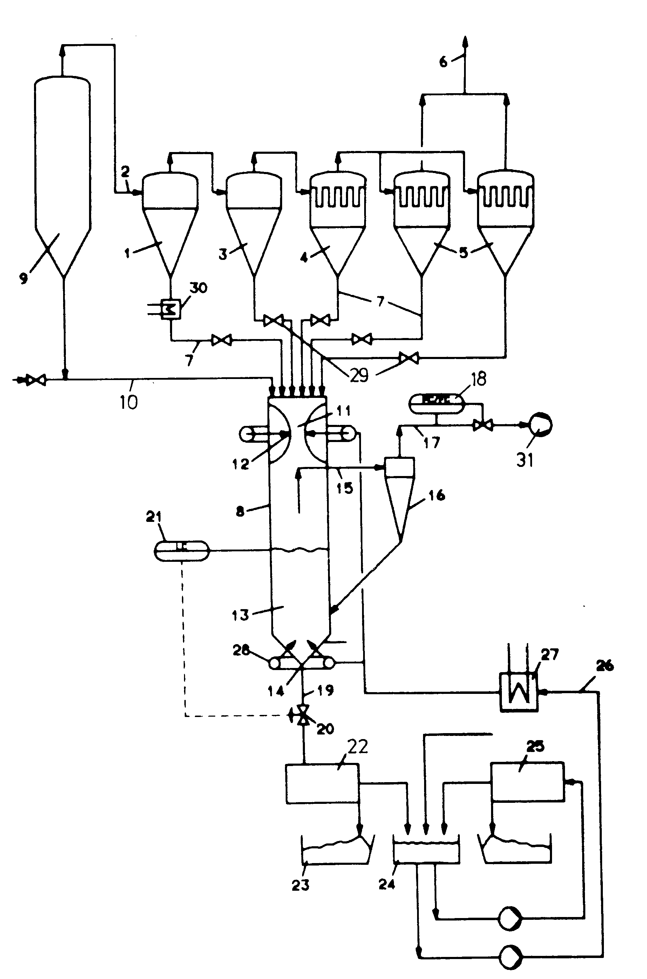

Ein Ausführungsbeispiel der Erfindung ist in der Zeichnung dargestellt und wird im folgenden näher erläutert. Die Zeichnung stellt ein Verfahrensschema dar.

Eine unter Druck stehende Heißgasentstaubungsanlage ist durch einen ersten, als Flugstaubabscheider dienenden Zyklon 1 gegeben, der über eine Gasleitung 2 mit einer Brennkammer 9 einer unter Druck betriebenen Wirbelschichtfeuerung verbunden ist. In dem ersten Zyklon 1 mag eine Temperatur von 850 Grad C und ein Druck von etwa 10 bar herrschen. Dem ersten Zyklon 1 ist ein zweiter Zyklon 3 und diesem ein erstes Filter 4 und zwei weitere parallel liegende Filter 5 nachgeschaltet. Das in den Zyklonen 1, 3 und den Filtern 4, 5 von Staub befreite Gas wird über eine Reingasleitung 6 einem Verwendungszweck zum Beispiel einer Gasturbine zugeführt. Aufgrund des sich einstellenden Druckverlustes mag der Druck in den letzten Filtern 5 etwa 8,5 bis 9 bar betragen.

Der Feststoffaustrag der Zyklone 1, 3 und der Filter 4, 5 ist jeweils über eine Förderleitung 7 mit einem Wäscher 8 verbunden. In den Förderleitungen 7 können zur Erfassung des Förderstromes jeweils ein Durchflußmesser 29 und gegebenenfalls ein Kühler 30 angeordnet sein. Zusätzlich kann die unter Druck betriebene Brennkammer 9 oder ein mit ihr verbundener Feststoffspeicher über eine pneumatische Förderleitung 10 mit dem Eingang des Wäschers 8 verbunden sein. Der Wäscher 8 weist eine Venturistrecke 11 auf, in der Wassereinspritzdüsen 12 angeordnet sind. Im unteren Teil des Wäschers 8 ist ein Sammelraum 13 vorgesehen, der mit einem Bodenauslauf 14 versehen ist. In dem Sammelraum 13 sammelt sich ein Gemisch aus Feststoffen und Wasser an. Der Wäscher 8 ist mit einem Gasauslaß 15 versehen, der mit einem unterhalb der Venturistrecke 11 angeordneten Steigrohr und mit einem als Abscheider dienenden Hydrozyklon 16 verbunden ist. Der untere Austrag des Hydrozyklons 16 ist mit dem Sammelraum 13 des Wäschers 8 verbunden. An den Hydrozyklon 16 schließt sich eine zu einem Kamin oder einer Verwertungseinrichtung führende Gasleitung 17 an, in der ein Mengen-oder Druckregler 18 angeordnet ist.

Der Wäscher 8 steht unter einem erhöhten Druck. Jedoch ist dieser Druck um einen durch den Druckregler 18 einstellbaren Differenzdruck kleiner als der Druck in den letzten Filtern 5. An den Bodenauslaß 14 des Wäschers 8 ist eine Leitung 19 angeschlossen, in der ein Entspannungsventil 20 angeordnet ist. Das Entspannungsventil 20 steht über eine Steuerleitung mit einem Wasserstandsregler 21 in Verbindung.

Die Leitung 19 mündet in eine Zentrifuge 22 zur Trennung von Feststoff und Wasser ein. Der abgetrennte Feststoff wird einem Container 23, und das Wasser wird einem Absetz- und Sammelbecken 24 zugeführt. Ein Teil des Wassers aus dem Absetz- und Sammelbecken 24 wird über eine Filterpresse 25 zur Abtrennung des restlichen Feststoffanteils im Kreislauf geführt. Ein anderer Teil des Wassers wird als Umlaufwasser den Wassereinspritzdüsen 12 über eine Wasserleitung 26 zugeführt, in der ein Kühler 27 angeordnet ist. Von der Wasserleitung 26 zweigt eine Nebenleitung ab, die zu Düsen 28 im Bodenbereich des Wäschers 8 geführt ist. Wasserverluste werden durch Zusatz von Frischwasser ersetzt.

Aufgrund der Druckdifferenz gegenüber dem Wäscher 8 drückt das die unter Druck stehenden Räume (Zyklon 1,3, Filter 4, 5, Brennkammer 9) durchströmende Gas die Feststoffe nach Art der pneumatischen Saugförderung kontinuierlich in den Wäscher 8. Über den Druckregler 18 wird in dem Wäscher 8 ein solcher Druck eingestellt, daß auch der Raum mit dem niedrigsten Druck, das sind in dem beschriebenen Fall die Filter 5, in den Wäscher 8 entsorgt wird. Die Feststoffe werden durch das in der Venturistrecke 11 eingespritzte Wasser befeuchtet und dabei gekühlt sowie von dem Fördergas befreit, das über die Gasleitung 17 abgeführt wird. Das bei der Befeuchtung entstehende Feststoff-Wasser-Gemisch sammelt sich in dem Sammelraum 13 an. Um Feststoffansammlungen durch Entmischung im Sammelraum 13 zu vermeiden, wird Wasser durch die Wasserdüsen 28 in den Bodenbereich eingedüst, so daß das Gemisch stets in Bewegung gehalten wird. Durch das Überangebot an Wasser während der Abspritzphase innerhalb der Venturistrecke 11 wird verhindert, daß Bestandteile des Feststoffes wie Gips oder Kalkstein agglomerieren können. Das weitgehend homogene Feststoff-Wasser-Gemisch wird durch das Entspannungsventil 20 auf Umgebungsdruck entspannt. Die Erfindung ist anhand der Entsorgung der Abscheider einer Druckwirbelschichtfeuerung erläutert worden, sie kann aber für die Ausschleusung von Feststoffen aus sonstigen unter Druck betriebenen Reaktoren eingesetzt werden, wo bisher Schleusensysteme verwendet wurden.

Die Erfindung kann auch dann verwendet werden, wenn die Brennkammer 9 und die nachgeschalteten Abscheider unter geringem Überdruck oder bei Atmosphärendruck betrieben werden. In diesem Fall wird auch den an die Zyklone 1, 3 und Filter 4, 5 angeschlossenen Förderleitungen 7 ein Fördergas zugeführt. Zur Einhaltung der Druckdifferenz im Wäscher 8 ist in der Gasleitung 17 ein Saugzuggebläse 31 anzuordnen.

## Patentansprüche

1. Verfahren zum Ausschleusen von feinkörnigen, heißen Feststoffen aus einer Heißgasentstaubungsanlage, in der sie unter dem erhöhten Druck des als Obergas wirkenden Heißgases stehen, dadurch gekennzeichnet, daß die Feststoffe kontinuierlich mit Hilfe des Obergases einem eine Druckdifferenz gegenüber der Heißgasentstaubungsanlage aufweisenden Wäscher zugeführt werden, daß die Feststoffe in dem Wäscher mit Wasser angefeuchtet, gekühlt und von dem Obergas getrennt werden und daß das sich bildende Feststoff-Wasser-Gemisch am Ausgang des Wäschers auf Atmosphärendruck entspannt und kontinuierlich abgeführt wird.

2. Verfahren nach Anspruch 1, dadurch gekennzeichnet, daß das Feststoff-Wasser-Gemisch in dem Wäscher durch Eindüsen von Wasser in Bewegung gehalten wird.

3. Vorrichtung zum Ausschleusen von feinkörnigen, heißen Feststoffen aus einer Heißgasentstaubungsanlage, in der sie unter dem erhöhten Druck des als Obergas wirkenden Heißgases stehen, zur Durchführung des Verfahrens nach den Ansprüchen 1 und 2, dadurch gekennzeichnet, daß der Feststoffaustrag der Heißgasentstaubungsanlage mit einem eine Druckdifferenz gegenüber der Heißgasentstaubungsanlage aufweisenden Wäscher (8) verbunden ist, daß der Wäscher (8) mit Wassereinspritzdüsen (12) versehen ist und einen Sammelraum (13) mit einem Bodenauslaß (14) für das Feststoff-Wasser-Gemisch und einen Gasauslaß (15) aufweist und daß in dem Bodenauslaß (14) ein Entspannungsventil (20) und in dem Gasauslaß (15) ein Mengen- oder Druckregler (18) angeordnet ist.

4. Vorrichtung nach Anspruch 3, dadurch gekennzeichnet, daß die Heißgasentstaubungsanlage mehrere unter unterschiedlichen erhöhten Drücken stehenden Räumen enthält und daß der Druck in dem Wäscher (8) geringer ist als der niedrigste in einem der Räume herrschende Druck.

5. Vorrichtung nach Anspruch 3 oder 4, dadurch gekennzeichnet, daß an den Gasauslaß (15) ein Abscheider (16) angeschlossen Austrag für Wasser und Staub mit dem Sammelraum (13) des Wäschers (8) verbunden ist.

6. Vorrichtung nach einem der Ansprüche 3 bis 5, dadurch gekennzeichnet, daß die Wassereinspritzdüsen (12) innerhalb einer Venturistrecke (11) angeordnet sind.

## Claims

1. Method for the shunting-out of finely grained, hot solid substances from a hot gas dust separation plant, in which they stand under the increased pressure of the hot gas acting as upper gas, characterised thereby, that the solid substances are fed continuously with the aid of the upper gas to a scrubber displaying a pressure difference relative to the hot gas dust separation plant, that the solid substances are moistened by water, cooled and separated from the upper gas in the scrubber and the forming mixture of solid substance and water at the exit of the scrubber is relieved to atmospheric pressure and conducted away continuously.

2. Method according to claim 1, characterised thereby, that the mixture of solid substance and water in the scrubber is kept in movement by the spraying-in of water.

3. Device for the shunting-out of finely grained, hot solid substances from a hot gas separation plant, in which they stand under the increased pressure of the hot gas acting as upper gas, for the performance of the method according to the claims 1 and 2, characterised thereby, that the solid substance output of the hot gas dust separation plant is connected with a scrubber (8) displaying a pressure difference relative to the hot gas dust separation plant, that the scrubber (8) is provided with water-injecting nozzles (12) and displays a collecting chamber (13) with a gas outlet (15) and with a base outlet (14) for the mixture of solid substance and water and that a relief valve (20) is arranged in the base outlet (14) and a quantity or pressure regulator (18) is arranged in the gas outlet (15).

4. Device according to claim 3, characterised thereby, that the hot gas dust separation plant contains several chambers standing under different increased pressures and that the pressure in the scrubber (8) is lower than the lowest pressure prevailing in one of the chambers.

5. Device according to claim 3 or 4, characterised thereby, that an output, which is connected to a separator (16), which is at a gas outlet (15), for water and dust is connected with the collecting chamber (13) of the scrubber (8).

6. Device according to one of the claims 3 to 5, characterised thereby, that the water-injecting nozzles (12) are arranged within a Venturi section (11).

## Revendications

1. Procédé d'éclusage de particules solides fines à température élevée à partir d'une installation de dépoussiérage de gaz, dans laquelle elles sont exposées à la pression élevée de ces gaz à haute température agissant comme gaz de tête, caractérisé en ce que les particules solides sont amenées de façon continue à l'aide de ces gaz, à un laveur, présentant une différence de pression par rapport à l'installation de dépoussiérage de gaz à température élevée, en ce que, dans le laveur, les particules solides sont humidifiées à l'aide d'eau, refroidies et séparées du gaz de tête et en ce que le mélange particules solides-eau se formant est détendu à la pression atmosphérique à la sortie du laveur et évacué en continu.

2. Procédé selon la revendication 1, caractérisé en ce que le mélange particules solides-eau est maintenu en mouvement dans le laveur au moyen d'injection d'eau.

3. Dispositif d'éclusage de particules solides fines à température élevée à partir d'une installation de dépoussiérage de gaz, dans laquelle elles sont exposées à la pression élevée de ces gaz à haute température agissant comme gaz de tête, pour mettre en oeuvre le procédé selon les revendications 1 et 2, caractérisé en ce que l'évacuation de particules solides appartenant à l'installation de dépoussiérage de gaz à température élevée est reliée à un laveur (8) présentant une différence de pression par rapport à l'installation de dépoussiérage de gaz à température élevée, en ce que le laveur (8) est pourvu de buses d'injection d'eau (12) et présente une enceinte collectrice (13) avec une évacuation inférieure (14) pour le mélange particules solides-eau et une évacuation de gaz (15) et en ce qu'une soupape de détente (20) est disposée dans l'évacuation du fond (14) et qu'un régulateur de débit ou de pression (18) est disposé dans l'évacuation de gaz (15).

4. Dispositif selon la revendication 3, caractérisé en ce que l'installation de dépoussiérage de gaz à température élevée contient plusieurs enceintes, exposées à des pressions différentes, et en ce que la pression dans le laveur (8) est inférieure à la plus basse des pressions régnant dans l'une des enceintes.

5. Dispositif selon la revendication 3 ou 4, caractérisé en ce qu'à l'évacuation de gaz (15) est relié un séparateur (16), dont l'évacuation d'eau et de poussière est reliée à l'enceinte collectrice (13) du laveur (8).

6. Dispositif selon l'une des revendications 3 à 5, caractérisé en ce que les buses d'injection d'eau (12) sont disposées à l'intérieur d'un tronçon Venturi (11).
